# FASCICULE DE BREVET EUROPEEN

(11) **EP 3 311 531 B1**
(45) Date de publication et mention de la délivrance du brevet: **19.08.2020**
(21) Numéro de dépôt: 16741062.0
(22) Date de dépôt: 03.06.2016
(51) Int. Cl.: H04L 12/46, H04L 29/06

(54) **COMPOSANT MATÉRIEL ET PROCÉDÉ D'ACCÈS D'UN TERMINAL DISTANT À UN RÉSEAU LOCAL, PASSERELLE DE SERVICE, PROCÉDÉ D'AUTORISATION D'ACCÈS ET PROGRAMME D'ORDINATEUR CORRESPONDANTS**
HARDWAREKOMPONENTE UND VERFAHREN FÜR FERNENDGERÄT ZUM ZUGRIFF EINES LOKALEN NETZWERKS, ZUGEHÖRIGES DIENST-GATEWAY, ZUGRIFFSAUTORISIERUNGSVERFAHREN UND COMPUTERPROGRAMM
HARDWARE COMPONENT AND METHOD FOR A REMOTE TERMINAL TO ACCESS A LOCAL NETWORK, CORRESPONDING SERVICE GATEWAY, ACCESS AUTHORISATION METHOD AND COMPUTER PROGRAM

(30) Priorité: 18.06.2015 FR 1555583
(43) Date de publication de la demande: 25.04.2018
(73) Titulaire: ORANGE, 75015 Paris (FR)
(72) Inventeur: MARCHAND, Hervé, 35770 Vern Sur Seiche (FR); GLOANEC, Simon, 35000 Rennes (FR)
(74) Mandataire: Vidon Brevets & Stratégie
(86) Numéro de dépôt international: PCT/FR2016/051341
(87) Numéro de publication internationale: WO 2016/203131

(56) Documents cités:
- US-A1- 2010 269 169
- US-A1- 2014 280 938
- US-A1- 2014 317 682

## Description

### 1. Domaine de l'invention

Le domaine de l'invention est celui des réseaux de communication.

Plus précisément, l'invention concerne l'accès par un terminal distant à un réseau de communication local, i.e. l'accès au réseau local lorsque le terminal n'est pas présent dans le réseau local.

L'invention trouve notamment des applications pour les utilisateurs nomades, en leur permettant d'accéder à distance à un réseau local particulier (réseau local domestique, d'entreprise, etc).

### 2. Art antérieur

De plus en plus d'utilisateurs souhaitent pouvoir accéder à leur environnement domestique ou professionnel, à leur imprimante, retrouver leurs contenus, etc., tout en étant connectés à distance. Par exemple, un utilisateur A souhaite pouvoir accéder à son réseau local domestique lorsqu'il est en déplacement, via sa tablette ou son smartphone, connecté à Internet.

L'accès distant à un réseau local particulier, encore appelé LAN pour « Local Area Network », est donc devenu une nécessité pour de nombreux utilisateurs nomades.

Différentes solutions existent pour couvrir ce besoin.

La publication de brevet US2014/0280938 décrit un système permettant d'accéder à un réseau UPnP distant. La publication de brevet US2010/0269169 décrit un accès distant à un réseau UPnP par l'intermédiaire d'une passerelle qui représente une instance virtuelle de nœud UPnP.

Ces différentes solutions nécessitent pour l'utilisateur d'installer un logiciel dédié sur le terminal qu'il utilise pour se connecter à distance, par exemple un logiciel libre permettant de créer un réseau privé virtuel de type « Open VPN ». Elles nécessitent également pour l'utilisateur de fournir des identifiants d'accès, ainsi qu'éventuellement l'adresse IP ou le FQDN (« Fully Qualified Domain Name » en anglais, « nom de domaine complétement qualifié » en français) du réseau local auquel il souhaite accéder.

Par exemple, l'utilisateur A qui souhaite pouvoir accéder à son réseau local domestique doit :
- installer un logiciel dédié sur sa tablette ou son smartphone, connecté à Internet,
- saisir les identifiants d'accès (login, mot de passe) à la passerelle de service faisant l'interface entre son réseau local domestique et le réseau Internet, et éventuellement son adresse IP ou son FQDN.

L'architecture peut alors se baser sur un serveur tiers pour réaliser la mise en relation.

Un inconvénient d'une telle technique est qu'elle nécessite l'installation d'un logiciel dédié sur le terminal utilisé par l'utilisateur. Un tel logiciel consomme des ressources du terminal, ce qui diminue ses performances.

Un autre inconvénient d'une telle technique est qu'elle repose sur un serveur supplémentaire pour réaliser la mise en relation entre le terminal utilisé par l'utilisateur et son LAN, ce qui engendre des coûts supplémentaires et une diminution de la sécurité/fiabilité. En particulier, en cas d'indisponibilité d'un tel serveur (par exemple en cas de dysfonctionnement ou de surcharge liée à plusieurs demandes de mises en relation simultanée), il n'est pas possible pour l'utilisateur d'accéder à son LAN à distance.

Il existe donc un besoin pour une nouvelle solution pour qu'un terminal distant puisse accéder à un réseau local particulier.

### 3. Exposé de l'invention

L'invention propose une solution nouvelle qui ne présente pas l'ensemble de ces inconvénients de l'art antérieur, sous la forme d'un composant matériel configuré pour permettre l'accès d'un terminal distant à un réseau de communication local, ledit réseau de communication local étant connecté à un réseau de communication étendu via une passerelle de service, dite passerelle d'origine.

Selon au moins un mode de réalisation de l'invention, un tel composant matériel est un élément détachable de ladite passerelle d'origine et comprend:
au moins une mémoire comprenant une zone de stockage non volatile stockant au moins un identifiant d'accès à ladite passerelle d'origine, ledit au moins un identifiant d'accès étant stocké dans ladite zone de stockage préalablement à l'installation de ladite passerelle d'origine associée audit réseau de communication local ou lors d'une phase d'appairage de ladite passerelle d'origine avec ledit composant matériel, des moyens de connexion audit réseau de communication étendu, des moyens de connexion audit terminal, et des moyens de requête en ouverture d'un tunnel de communication sécurisé avec ladite passerelle d'origine, à partir dudit au moins un identifiant d'accès à ladite passerelle d'origine.

Par exemple, de tels moyens de connexion au réseau étendu et au terminal sont de type connecteur femelle Ethernet et connecteur mâle Ethernet, ou connecteur femelle USB et connecteur mâle USB, ou point d'accès WiFi, ou point d'accès Bluetooth®, etc.

Les moyens de connexion sont de préférence des moyens de connexion directe. De tels moyens permettent donc de connecter directement le composant matériel au terminal, i.e. sans équipement intermédiaire.

Eventuellement, le composant matériel est connecté au réseau étendu par l'intermédiaire d'une passerelle de service entre un deuxième réseau de communication local et le réseau étendu, dite passerelle hôte.

Comme le composant matériel comprend une zone de stockage non volatile d'au moins un identifiant d'accès à la passerelle d'origine servant d'interface entre le réseau local et le réseau étendu, il n'est pas nécessaire pour l'utilisateur de saisir ces identifiants d'accès lorsqu'il souhaite accéder au réseau local. En effet, une telle zone de stockage non volatile permet de stocker au moins un identifiant d'accès à la passerelle d'origine dans une mémoire de façon permanente ou semi-permanente. Il s'agit par exemple d'une mémoire morte de type ROM, EPROM, EEPROM ou UVPROM, ou d'une mémoire vive de type RAM non volatile.

Par exemple, de tels identifiants d'accès comprennent un login et un mot de passe de connexion à la passerelle d'origine (en anglais « credentials »). Eventuellement, de tels identifiants d'accès comprennent également une adresse IP WAN ou FQDN de la passerelle d'origine.

En particulier, un tel composant matériel comprend des moyens de requête en ouverture d'un tunnel de communication sécurisé avec la passerelle d'origine. Il est donc autonome, et une fois connecté au réseau étendu, il permet d'ouvrir un tunnel de communication sécurisé entre lui et la passerelle d'origine.

Un utilisateur peut ainsi retrouver son environnement de travail sans aucune contrainte liée à une configuration ou une installation logicielle. La matérialisation d'un tel service sur un support physique simplifie donc l'accès à distance à un LAN particulier.

Selon une caractéristique particulière, les moyens de requête en ouverture d'un tunnel de communication sécurisé comprennent un module client d'accès à distance, apte à communiquer avec un module serveur d'accès à distance de la passerelle d'origine.

Par exemple, ces deux modules communiquent selon un protocole d'accès à distance de type UPnP (« UPnP RA »). La passerelle d'origine peut ainsi embarquer une brique logicielle de type serveur UPnP RA et le composant matériel une brique logicielle de type client UPnP RA.

Un tel protocole permet ainsi de connecter aisément le composant matériel et la passerelle d'origine, en ouvrant un tunnel de communication sécurisé entre ces deux équipements.

Selon un mode de réalisation particulier de l'invention, les moyens de requête en ouverture d'un tunnel de communication sécurisé comprennent des moyens d'obtention d'au moins une information de connexion à la passerelle d'origine.

Une telle information de connexion est par exemple de type adresse IP WAN.

Comme indiqué précédemment, une telle information de connexion à la passerelle d'origine peut, selon un premier exemple, être considérée comme un identifiant d'accès à la passerelle d'origine. Les identifiants d'accès à la passerelle d'origine peuvent être stockés dans une zone mémoire du composant matériel, par exemple au cours d'une phase préalable d'appairage du composant matériel à la passerelle d'origine. Selon un deuxième exemple, les informations de connexion à la passerelle d'origine sont récupérées par le composant matériel, par exemple lors de l'ouverture du tunnel de communication sécurisé. Dans le cas d'une passerelle de service fournie par Orange®, plus communément appelée « Livebox »®, les adresses IP sont régulièrement mises à jour. Dans ce cas, le composant matériel embarque par exemple un FQDN (comme l'URL de la Livebox®) et fait ensuite une requête DNS (« Domain Name System » en anglais, « système de noms de domaine » en français) pour obtenir l'adresse IP WAN de la Livebox®.

Selon une autre caractéristique particulière de l'invention, ladite au moins une mémoire comprend également une zone de stockage d'une clé et/ou d'un certificat d'authentification du composant matériel et/ou de la passerelle d'origine.

Il est ainsi possible d'améliorer la sécurité d'accès à distance au réseau local. Par exemple, des clés peuvent être embarquées sur le composant matériel afin de garantir la confidentialité des échanges avec la passerelle d'origine.

En particulier, de tels clés et/ou certificats peuvent être échangés entre la passerelle d'origine et le composant matériel au cours d'une phase d'appairage.

Selon un exemple de mise en œuvre de l'invention, ladite au moins une mémoire comprend en outre une zone de stockage d'une liste de terminaux autorisés à utiliser le composant matériel.

De cette façon, un utilisateur non autorisé ne pourra pas se servir du composant matériel pour accéder au réseau local.

En particulier, la liste de terminaux autorisés à utiliser le composant matériel comprend des identifiants de terminaux ayant fait l'objet d'un appairage avec la passerelle d'origine.

Une telle liste peut notamment être créée dans le réseau de communication local.

La liste de terminaux autorisés à utiliser le composant matériel est ainsi construite dans le réseau local associé à la passerelle d'origine, et non à distance, ce qui offre une plus grande sécurité pour les échanges ultérieurs.

Par exemple, la liste peut être créée et/ou mise à jour automatiquement, dès lors qu'un terminal est appairé avec la passerelle d'origine, ou créée et/ou mise à jour manuellement.

L'invention concerne également une passerelle de service destinée à connecter un réseau de communication local à un réseau de communication étendu, dite passerelle d'origine.

Selon au moins un mode de réalisation, une telle passerelle d'origine comprend des moyens d'autorisation d'ouverture d'un tunnel de communication sécurisé avec un composant matériel tel que décrit ci-dessus, configuré pour permettre l'accès d'un terminal distant au réseau de communication local.

Une telle passerelle d'origine sert d'interface entre le réseau local (ordinateur, tablette, smartphone, télévision connectée, imprimante, etc, connectés à la passerelle d'origine via une liaison filaire de type Ethernet ou une liaison sans fil de type Wi-Fi par exemple) et le réseau étendu.

En particulier, une telle passerelle d'origine comprend des moyens d'autorisation d'ouverture d'un tunnel de communication sécurisé avec un composant matériel tel que décrit ci-dessus. Elle est donc autonome, et permet d'ouvrir simplement un tunnel de communication sécurisé entre elle et le composant matériel.

Selon une caractéristique particulière, les moyens d'autorisation d'ouverture d'un tunnel de communication sécurisé comprennent un module serveur d'accès à distance, apte à communiquer avec un module client d'accès à distance du composant matériel.

Par exemple, ces deux modules communiquent selon un protocole d'accès à distance de type UPnP (« UPnP RA »). La passerelle d'origine peut ainsi embarquer une brique logicielle de type serveur UPnP RA et le composant matériel une brique logicielle de type client UPnP RA.

Comme déjà indiqué, un tel protocole permet de connecter aisément le composant matériel et la passerelle d'origine.

Selon un mode de réalisation particulier, le composant matériel est un élément détachable de la passerelle d'origine.

Ainsi, lorsqu'un utilisateur acquiert une passerelle, par exemple de type Livebox®, selon ce mode de réalisation, il dispose d'un composant matériel lui permettant d'accéder à distance à son réseau local.

L'invention concerne par ailleurs un procédé d'accès d'un terminal distant à un réseau de communication local selon la revendication indépendante 11.

En particulier, l'étape de requête en ouverture d'un tunnel de communication sécurisé met en œuvre un protocole d'accès à distance de type « UPnP Remote Access », permettant de connecter aisément le composant matériel et la passerelle d'origine.

Selon une caractéristique spécifique, l'étape de requête en ouverture est précédée d'une étape de vérification d'autorisation d'utilisation du composant matériel par le terminal distant. Dans ce cas, l'ouverture du tunnel de communication sécurisé est effectuée uniquement si la vérification est positive.

Pour ce faire, le composant matériel stocke par exemple une liste de terminaux autorisés à l'utiliser, et vérifie si le terminal auquel il est connecté est autorisé à communiquer avec la passerelle d'origine préalablement à l'ouverture du tunnel de communication sécurisé.

Selon un mode de réalisation particulier, l'étape de requête en ouverture d'un tunnel de communication sécurisé met en œuvre une étape d'obtention d'au moins une information de connexion à la passerelle d'origine.

Selon une autre caractéristique particulière, le procédé comprend une étape préalable d'appairage de la passerelle d'origine avec le composant matériel, mise en œuvre préalablement à l'étape de requête en ouverture d'un tunnel de communication sécurisé.

Un tel appairage permet notamment de stocker les identifiants d'accès à la passerelle d'origine dans une zone de stockage du composant matériel, et éventuellement un échange de clés et/ou certificats d'authentification entre le composant matériel et la passerelle d'origine.

Selon un mode de réalisation particulier, l'étape de requête en ouverture d'un tunnel de communication sécurisé met également en œuvre une étape d'authentification du composant matériel et/ou de la passerelle d'origine.

Comme déjà indiqué, il est ainsi possible d'améliorer la sécurité d'accès à distance au réseau local.

L'invention concerne en outre un procédé d'autorisation d'accès d'un terminal distant à un réseau de communication local selon la revendication indépendante 14.

Un tel procédé peut notamment être mis en œuvre par une passerelle d'origine telle que décrite précédemment. Les avantages de ce procédé sont similaires à ceux de la passerelle d'origine correspondante.

En particulier, un tel procédé comprend une étape d'obtention d'une table de correspondance entre un identifiant de composant matériel et une liste de terminaux autorisés à utiliser le composant matériel. Dans ce cas, l'étape d'autorisation d'ouverture d'un tunnel de communication sécurisé est mise en œuvre uniquement si le terminal appartient à la liste.

Pour ce faire, la passerelle d'origine stocke une table de correspondance entre un identifiant de composant et une liste de terminaux autorisés à utiliser ce composant, et vérifie si le composant matériel qui requiert l'ouverture d'un tunnel de communication sécurisé avec la passerelle d'origine est connecté avec un terminal autorisé.

L'invention concerne encore, selon au moins un mode de réalisation, au moins un programme d'ordinateur selon la revendication indépendante 16.

En particulier, les différentes étapes du procédé d'accès d'un terminal distant à un réseau de communication local sont mises en œuvre par un ou plusieurs logiciels ou programmes d'ordinateur, comprenant des instructions logicielles destinées à être exécutées par un processeur de données du composant matériel selon un mode de réalisation de l'invention. Les différentes étapes du procédé d'autorisation d'accès d'un terminal distant à un réseau de communication local sont également mises en œuvre par un ou plusieurs logiciels ou programmes d'ordinateur, comprenant des instructions logicielles destinées à être exécutées par un processeur de données de la passerelle d'origine selon un mode de réalisation de l'invention.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple de réseau local et de réseau étendu, permettant l'accès à distance d'un terminal au réseau local ;
- la figure 2 illustre la structure simplifiée d'un composant matériel selon un mode de réalisation de l'invention ;
- les figures 3A et 3B présentent les principales étapes mises en œuvre par un composant matériel et une passerelle d'origine selon un mode de réalisation de l'invention ;
- la figure 4 illustre la structure simplifiée d'une passerelle d'origine selon un mode de réalisation de l'invention ;
- la figure 5 illustre un exemple d'application de l'invention selon un mode de réalisation particulier, permettant l'accès à distance d'un terminal à un réseau local distant via une passerelle hôte.

### 5. Description d'un mode de réalisation de l'invention

Le principe général de l'invention repose sur l'utilisation d'un composant matériel, destiné à être connecté entre un réseau de communication étendu et un terminal, permettant au terminal d'accéder à un réseau de communication local, à distance.

Pour ce faire, un tel composant matériel comprend au moins une zone de stockage non volatile d'au moins un identifiant d'accès à une passerelle de service servant d'interface entre le réseau local et le réseau étendu, dite passerelle d'origine, et embarque une fonctionnalité d'accès à distance à cette passerelle d'origine.

On présente ci-après les principales étapes mises en œuvre par un composant matériel et par une passerelle d'origine, pour qu'un terminal connecté au composant matériel puisse accéder à distance à une passerelle d'origine servant d'interface entre le réseau local et le réseau étendu.

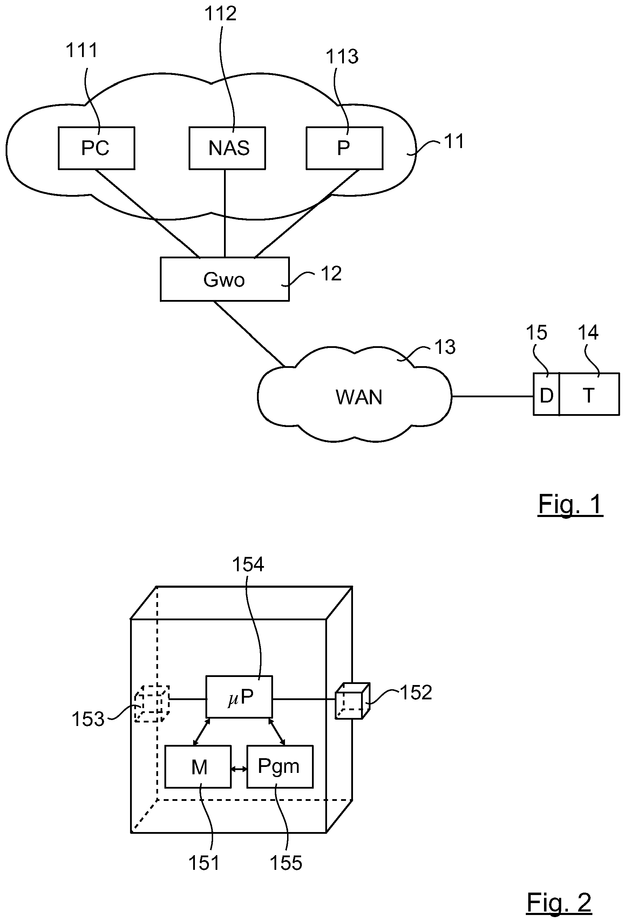

On considère à titre d'exemple, comme illustré en figure 1, un réseau local LAN 11 comprenant un ordinateur personnel PC 111, un serveur de stockage en réseau NAS 112, une imprimante P 113. Une passerelle d'origine GWo 12 permet aux différents équipements du réseau local 11 de s'y connecter (via une liaison filaire de type Ethernet ou une liaison sans fil de type Wi-Fi par exemple) afin d'échanger des données entre eux mais également avec l'extérieur. La passerelle d'origine 12 fait donc office d'interface entre le réseau local 11 et un réseau étendu WAN 13, comme le réseau Internet. Cette passerelle peut encore être appelée « passerelle abonné », puisque selon un mode de réalisation particulier, elle permet à un utilisateur « abonné », qui souscrit à un service, d'accéder à distance à son réseau local 11.

On considère également un terminal T 14, non présent dans le réseau local 11, qu'un utilisateur souhaite utiliser pour accéder au réseau local 11, et un composant matériel D 15 connecté entre le terminal 14 et le réseau étendu 13.

Comme illustré en figure 2, un tel composant 15 comprend, de manière simplifiée :
- au moins une mémoire M 151 comprenant une zone de stockage non volatile d'au moins un identifiant d'accès à la passerelle d'origine 12,
- des moyens de connexion 152 au réseau de communication étendu 13,
- des moyens de connexion directe 153 au terminal 14, et
- des moyens de requête en ouverture d'un tunnel de communication sécurisé avec la passerelle d'origine 12, à partir du ou des identifiants d'accès à la passerelle d'origine.

Par exemple, les moyens de connexion 152 au réseau étendu 13 comprennent un connecteur Ethernet mâle et les moyens de connexion 153 au terminal 14 comprennent un connecteur Ethernet femelle, ou vice-versa. Selon un deuxième exemple, les moyens de connexion 152 au réseau étendu 13 comprennent un connecteur mâle USB et les moyens de connexion 153 au terminal 14 comprennent un connecteur USB femelle, ou vice-versa. Selon un troisième mode de réalisation, les moyens de connexion 152 au réseau étendu WAN 13 et les moyens de connexion 153 au terminal T 14 comprennent un point d'accès WiFi ou un point d'accès Bluetooth®, etc.

Les moyens de requête en ouverture d'un tunnel de communication sécurisé entre le composant matériel 15 et la passerelle d'origine 12 mettent par exemple en œuvre une unité de traitement 154, équipée par exemple d'un microprocesseur ***µP***, et pilotée par le programme d'ordinateur 155, mettant en œuvre un procédé d'accès du terminal distant 14 au réseau local 11, selon un mode de réalisation particulier de l'invention. A l'initialisation, les instructions de code du programme d'ordinateur 155 sont par exemple chargées dans une mémoire RAM avant d'être exécutées par le microprocesseur de l'unité de traitement 154.

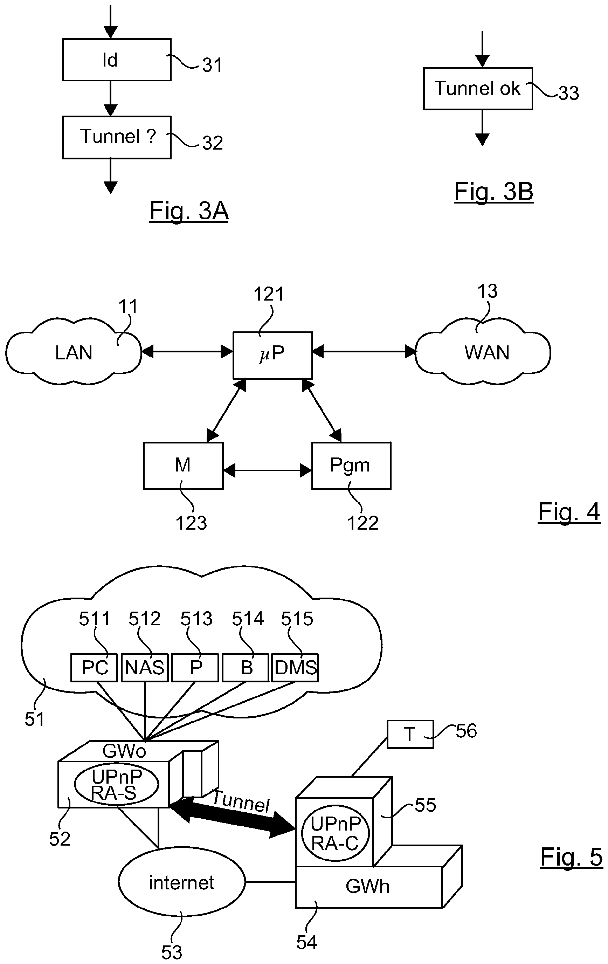

Comme illustré en figure 3A, pour permettre l'accès du terminal distant 14 au réseau local 11, le composant matériel 15 met en œuvre un procédé d'autorisation d'accès comprenant les principales étapes suivantes :
- lecture 31 d'au moins un identifiant d'accès à la passerelle d'origine 12, stocké dans une zone de stockage non volatile de la mémoire 151 du composant matériel,
- requête 32 en ouverture d'un tunnel de communication sécurisé avec la passerelle d'origine 12, à partir du ou des identifiants d'accès à la passerelle d'origine.

Comme illustré en figure 3B, pour autoriser l'accès du terminal distant 14 au réseau local 11, la passerelle d'origine 12 met quant à elle en œuvre un procédé d'autorisation d'accès comprenant une étape 33 d'autorisation d'ouverture d'un tunnel de communication sécurisé avec le composant matériel 15.

La figure 4 illustre de manière simplifiée la structure d'une passerelle d'origine destinée à connecter le réseau local 11 au réseau étendu 13 selon un mode de réalisation de l'invention. Une telle passerelle d'origine 12 comprend des moyens d'autorisation d'ouverture d'un tunnel de communication sécurisé avec le composant matériel 15 configuré pour permettre l'accès du terminal distant 14 au réseau local 11.

Les moyens d'autorisation d'ouverture d'un tunnel de communication sécurisé entre le composant matériel 15 et la passerelle d'origine 12 mettent par exemple en œuvre une unité de traitement 121, équipée par exemple d'un microprocesseur *µP*, et pilotée par le programme d'ordinateur 122, mettant en œuvre un procédé d'autorisation d'accès du terminal distant 14 au réseau local 11, selon un mode de réalisation particulier de l'invention. A l'initialisation, les instructions de code du programme d'ordinateur 122 sont par exemple chargées dans une mémoire RAM 123 avant d'être exécutées par le microprocesseur de l'unité de traitement 121.

Par exemple, les moyens de requête en ouverture d'un tunnel de communication sécurisé du composant matériel 15 comprennent un module client d'accès à distance et les moyens d'autorisation d'ouverture d'un tunnel de communication sécurisé de la passerelle d'origine 12 mettent en œuvre un module serveur d'accès à distance. Ces deux modules peuvent communiquer selon un protocole d'accès à distance de type UPnP (« UPnP RA »).

On décrit ci-après un exemple d'application de l'invention, permettant à un utilisateur A d'accéder à son réseau local domestique lorsqu'il est chez un utilisateur B, via la passerelle de service de l'utilisateur B, appelée « passerelle hôte », ou tout autre accès internet.

Selon cet exemple, illustré en figure 5, le réseau local 51 de l'utilisateur A comprend un ordinateur personnel PC 511, un serveur de stockage en réseau NAS 512, une imprimante P 513, une boite à outils B 514 permettant notamment de partager des contenus multimédia, de créer un réseau Wi-Fi et de recharger des appareils (par exemple de type « Homepoint »®), et un serveur multimédia DMS 515. Une passerelle d'origine GWo 52 sert d'interface entre le réseau local 51 de l'utilisateur A et le réseau Internet 53.

On considère également une passerelle hôte GWh 54, servant d'interface entre le réseau Internet 53 et le réseau local de l'utilisateur B. Une telle passerelle hôte est utilisée, selon cet exemple d'application, comme point d'accès pour accéder au réseau Internet.

L'utilisateur A, lorsqu'il est chez l'utilisateur B, peut accéder à son propre réseau domestique 51, par l'intermédiaire d'un terminal T 56 (qui peut lui appartenir, appartenir à l'utilisateur B, ...), via un composant matériel 55 connecté entre le terminal 56 et la passerelle hôte 54, selon un mode de réalisation de l'invention.

Selon cet exemple d'application, on considère que la passerelle d'origine 52 embarque une brique logicielle UPnP RA de type serveur et que le composant matériel 55 embarque une brique logicielle UPnP RA de type client.

Par exemple, le composant matériel 55 est un élément physique détachable de la passerelle d'origine 52. Ainsi, lors de l'achat de la passerelle d'origine 52, le composant matériel 55 est fourni avec la passerelle d'origine 52. Le ou les identifiants d'accès à la passerelle d'origine 52 peuvent ainsi être stockés dans une zone de stockage du composant matériel 55 préalablement à l'installation de la passerelle d'origine chez l'utilisateur A. En variante, le ou les identifiants d'accès à la passerelle d'origine 52 peuvent être stockés dans une zone de stockage du composant matériel 55 lors d'une phase d'appairage de la passerelle d'origine 52 et du composant matériel 55.

Eventuellement, des échanges de clés et/ou certificats d'authentification du composant matériel et/ou de la passerelle d'origine peuvent être mis en œuvre préalablement à l'installation de la passerelle d'origine chez l'utilisateur A, ou lors de la phase d'appairage, afin d'améliorer la sécurité des échanges ultérieurs. De tels échanges de clés, ou partage de secrets, entre le composant matériel et la passerelle d'origine, sont mis en œuvre selon une technique classique, non décrite ici. Par exemple, une telle technique est de type « SSL 2 ways ».

Lorsque le composant matériel 55 connaît le ou les identifiants d'accès à la passerelle d'origine 52, il peut être utilisé par l'utilisateur A, chez l'utilisateur B, pour avoir accès au réseau local domestique de l'utilisateur A.

Selon cet exemple d'application, un tel composant matériel peut donc être détaché de la passerelle d'origine 52 et transporté, pour pouvoir être utilisé chez l'utilisateur B. Il possède une connectivité, de type Ethernet par exemple, lui permettant de se connecter sur un des ports de la passerelle hôte 54 de l'utilisateur B et d'accéder au réseau Internet 53. De plus, il embarque les briques logicielles nécessaires à l'accès à distance au réseau local 51 (CPU, ROM ou RAM non volatile, client UPnP RA) et les informations permettant un accès à distance sécurisé. La passerelle d'origine 52 embarque quant à elle les briques logicielles nécessaires à l'autorisation d'accès à distance au réseau local 51 (serveur UPnP RA).

Lorsque le composant matériel 15 est connecté à la passerelle hôte 54, il assure de lui-même la mise en relation du réseau local 51 de l'utilisateur A et du réseau local de l'utilisateur B.

Plus précisément, le composant matériel 15 utilise les informations permettant un accès à distance sécurisé, stockées dans au moins une zone de stockage non volatile d'une mémoire du composant matériel, et des échanges de messages entre son client UPnP RA et le serveur UPnP RA de la passerelle d'origine 52, pour créer un tunnel de communication sécurisé entre le composant matériel 15 et la passerelle d'origine 52. Le composant matériel 15 peut ainsi se mettre en relation avec le serveur UPnP de la passerelle d'origine 52. Le document « UPnP® Remote Access - Connecting Two Home or Small Business Networks » (http://upnp.org/resources/whitepapers/ UPnPRemoteAccessWhitePaper_2012.pdf) - Juin 2012 - présente notamment plus en détail les échanges de messages selon un protocole d'accès à distance UPnP.

Par exemple, les informations permettant un accès à distance sécurisé comprennent des identifiants d'accès associés à la passerelle d'origine 52 (par exemple de type login, mot de passe, éventuellement FQDN de la passerelle d'origine), éventuellement des informations liées à la sécurité (clés et/ou certificats d'authentification du composant matériel et/ou de la passerelle d'origine, secrets partagés, ...) ainsi qu'éventuellement des informations liées à un point d'accès Wifi du composant matériel. Le composant matériel 55 peut en effet posséder son propre point d'accès Wifi, qui est utilisé quand le composant matériel 55 est connecté sur une passerelle hôte 54. Selon cet exemple, le point d'accès Wifi du composant matériel 55 dispose du même identifiant SSID (« Service Set Identifier ») et du même mot de passe que la passerelle d'origine 52. Ces informations permettant un accès à distance sécurisé sont utilisées par le client UPnP RA du composant matériel 55 pour établir une connexion avec le serveur UPnP RA de la passerelle d'origine 52.

L'utilisateur A peut ainsi accéder à son LAN distant de manière immédiate et sans aucune configuration.

Eventuellement, une liste de terminaux autorisés à utiliser le composant matériel peut être stockée dans une zone de stockage d'une mémoire du composant matériel. Par exemple, seuls le smartphone et la tablette de l'utilisateur A peuvent être autorisés à utiliser le composant matériel 55. De cette façon, même si le composant matériel 55 est connecté à la passerelle hôte 54 de l'utilisateur B, ce dernier ne pourra pas accéder au réseau local de l'utilisateur A à partir de ses propres terminaux.

Selon cet exemple, l'étape de requête en ouverture (32) peut être précédée d'une étape de vérification d'autorisation d'utilisation du composant par le terminal distant, et l'ouverture n'avoir lieu que si la vérification est positive.

Comme déjà indiqué, une telle liste peut notamment être créée dans le réseau de local de l'utilisateur A, avec les équipements du réseau local de l'utilisateur A (PC 511 par exemple). La liste peut être créée et/ou mise à jour automatiquement, dès lors qu'un terminal est appairé avec la passerelle d'origine, ou créée et/ou mise à jour manuellement.

## Revendications

1. **Composant matériel** configuré pour permettre l'accès d'un terminal distant (14) à un réseau de communication local (11),
ledit réseau de communication local étant destiné à être connecté à un réseau de communication étendu (13) via une passerelle de service, dite passerelle d'origine (12),
**caractérisé en ce que** ledit composant matériel (15) est un élément physique détachable de ladite passerelle d'origine, comprenant :
- au moins une mémoire (151) comprenant une zone de stockage non volatile stockant au moins un identifiant d'accès à ladite passerelle d'origine, ledit au moins un identifiant d'accès étant stocké dans ladite zone de stockage préalablement à l'installation de ladite passerelle d'origine associée audit réseau de communication local ou lors d'une phase d'appairage de ladite passerelle d'origine avec ledit composant matériel,
- des moyens de connexion (152) audit réseau de communication étendu,
- des moyens de connexion (153) audit terminal, et
- des moyens de requête en ouverture d'un tunnel de communication sécurisé avec ladite passerelle d'origine, à partir dudit au moins un identifiant d'accès à ladite passerelle d'origine.

2. Composant matériel selon la revendication 1, **caractérisé en ce que** lesdits moyens de requête en ouverture d'un tunnel de communication sécurisé comprennent un module client d'accès à distance, apte à communiquer avec un module serveur d'accès à distance de ladite passerelle d'origine.

3. Composant matériel selon l'une quelconque des revendications 1 et 2, **caractérisé en ce que** lesdits moyens de requête en ouverture d'un tunnel de communication sécurisé comprennent des moyens d'obtention d'au moins une information de connexion à ladite passerelle d'origine.

4. Composant matériel selon l'une quelconque des revendications 1 à 3, **caractérisé en ce que** ladite au moins une mémoire comprend également une zone de stockage d'une clé et/ou d'un certificat d'authentification dudit composant matériel et/ou de ladite passerelle d'origine.

5. Composant matériel selon l'une quelconque des revendications 1 à 4, **caractérisé en ce que** ladite au moins une mémoire comprend en outre une zone de stockage d'une liste de terminaux autorisés à utiliser ledit composant matériel.

6. Composant matériel selon la revendication 5, **caractérisé en ce que** ladite liste de terminaux autorisés à utiliser ledit composant matériel comprend des identifiants de terminaux ayant fait l'objet d'un appairage avec ladite passerelle d'origine.

7. Composant matériel selon l'une quelconque des revendications 5 et 6, **caractérisé en ce que** ladite liste de terminaux autorisés à utiliser ledit composant matériel est créée dans ledit réseau de communication local.

8. Composant matériel selon la revendication 1, **caractérisé en ce que** lesdits moyens de connexion sont des moyens de connexion directe.

9. **Passerelle de service** destinée à connecter un réseau de communication local à un réseau de communication étendu, dite passerelle d'origine,
**caractérisée en ce que** ladite passerelle d'origine comprend :
- un composant matériel selon l'une quelconque des revendications 1 à 8,
- des moyens de réception d'une requête en ouverture d'un tunnel de communication sécurisé avec ledit composant matériel configuré pour permettre l'accès d'un terminal distant audit réseau de communication local, tenant compte d'au moins un identifiant d'accès à la passerelle d'origine stocké dans une zone de stockage non volatile d'au moins une mémoire dudit composant matériel,
- des moyens d'autorisation d'ouverture d'un tunnel de communication sécurisé avec ledit composant matériel.

10. Passerelle de service selon la revendication 9, **caractérisée en ce que** lesdits moyens d'autorisation d'ouverture d'un tunnel de communication sécurisé comprennent un module serveur d'accès à distance, apte à communiquer avec un module client d'accès à distance dudit composant matériel.

11. **Procédé d'accès** d'un terminal distant à un réseau de communication local,
ledit réseau de communication local étant connecté à un réseau de communication étendu via une passerelle de service, dite passerelle d'origine,
**caractérisé en ce que** ledit procédé met en œuvre les étapes suivantes, au sein d'un composant matériel selon l'une quelconque des revendications 1 à 8, préalablement détaché de ladite passerelle d'origine, connecté audit réseau de communication étendu et configuré pour permettre l'accès dudit terminal distant audit réseau de communication local :
- lecture (31) d'au moins un identifiant d'accès à ladite passerelle d'origine, stocké dans une zone de stockage non volatile d'au moins une mémoire dudit composant matériel, ledit au moins un identifiant d'accès étant stocké dans ladite zone de stockage préalablement à l'installation de ladite passerelle d'origine associée audit réseau de communication local ou lors d'une phase d'appairage de ladite passerelle d'origine avec ledit composant matériel,
- requête (32) en ouverture d'un tunnel de communication sécurisé avec ladite passerelle d'origine, à partir dudit au moins un identifiant d'accès à ladite passerelle d'origine.

12. Procédé d'accès selon la revendication 11, **caractérisé en ce que** l'étape de requête en ouverture est précédée d'une étape de vérification d'autorisation d'utilisation dudit composant matériel par ledit terminal distant, et **en ce que** l'ouverture dudit tunnel de communication sécurisé est effectuée si la vérification est positive.

13. Procédé d'accès selon l'une quelconque des revendications 11 et 12, **caractérisé en ce que** ladite étape de requête en ouverture d'un tunnel de communication sécurisé met en œuvre un protocole d'accès à distance de type « UPnP Remote Access ».

14. **Procédé d'autorisation d'accès** d'un terminal distant à un réseau de communication local, ledit réseau de communication local étant connecté à un réseau de communication étendu via une passerelle de service, dite passerelle d'origine,
**caractérisé en ce que** ledit procédé met en œuvre, au sein de ladite passerelle d'origine :
une étape de réception d'une requête en ouverture d'un tunnel de communication sécurisé avec un composant matériel selon l'une quelconque des revendications 1 à 8, préalablement détaché de ladite passerelle d'origine, configuré pour permettre l'accès dudit terminal distant audit réseau de communication local, tenant compte d'au moins un identifiant d'accès à la passerelle d'origine stocké dans une zone de stockage non volatile d'au moins une mémoire dudit composant matériel, une étape d'autorisation (33) d'ouverture d'un tunnel de communication sécurisé avec ledit composant matériel.

15. Procédé d'autorisation d'accès selon la revendication 14, **caractérisé en ce qu'**il comprend également une étape d'obtention d'une table de correspondance entre un identifiant de composant matériel et une liste de terminaux autorisés à utiliser ledit composant matériel, et **en ce que** ladite étape d'autorisation d'ouverture d'un tunnel de communication sécurisé est mise en œuvre si ledit terminal appartient à ladite liste.

16. **Programme d'ordinateur** comportant des instructions pour la mise en œuvre d'un procédé selon la revendication 11 ou selon la revendication 14 lorsque ce programme est exécuté par un processeur.

## Patentansprüche

1. Hardwarekomponente, welche dafür ausgelegt ist, den Zugriff eines entfernten Endgerätes (14) auf ein lokales Kommunikationsnetzwerk (11) zu ermöglichen,
wobei das lokale Kommunikationsnetzwerk dazu bestimmt ist, mit einem Weitverkehrsnetz (13) über ein Service-Gateway, Ursprungs-Gateway (12) genannt, verbunden zu werden,
**dadurch gekennzeichnet, dass** die Hardwarekomponente (15) ein von dem Ursprungs-Gateway lösbares physisches Element ist, welches umfasst:
- wenigstens einen Speicher (151), der einen nichtflüchtigen Speicherbereich umfasst, der wenigstens eine Zugangskennung zu dem Ursprungs-Gateway speichert, wobei die wenigstens eine Zugangskennung in dem Speicherbereich vor der Installation des dem lokalen Kommunikationsnetzwerk zugeordneten Ursprungs-Gateways oder während einer Phase der Paarbildung zwischen dem Ursprungs-Gateway und der Hardwarekomponente gespeichert wird,
- Mittel zur Verbindung (152) mit dem Weitverkehrsnetz,
- Mittel zur Verbindung (153) mit dem Endgerät, und
- Mittel zur Anforderung des Öffnens eines sicheren Kommunikationstunnels mit dem Ursprungs-Gateway mithilfe der wenigstens einen Zugangskennung zu dem Ursprungs-Gateway.

2. Hardwarekomponente nach Anspruch 1, **dadurch gekennzeichnet, dass** die Mittel zur Anforderung des Öffnens eines sicheren Kommunikationstunnels ein Fernzugriffs-Client-Modul umfassen, das in der Lage ist, mit einem Fernzugriffs-Servermodul des Ursprungs-Gateways zu kommunizieren.

3. Hardwarekomponente nach einem der Ansprüche 1 und 2, **dadurch gekennzeichnet, dass** die Mittel zur Anforderung des Öffnens eines sicheren Kommunikationstunnels Mittel zur Gewinnung wenigstens einer Information zur Verbindung mit dem Ursprungs-Gateway umfassen.

4. Hardwarekomponente nach einem der Ansprüche 1 bis 3, **dadurch gekennzeichnet, dass** der wenigstens eine Speicher außerdem einen Speicherbereich für einen Schlüssel und/oder ein Authentifizierungszertifikat der Hardwarekomponente und/oder des Ursprungs-Gateways umfasst.

5. Hardwarekomponente nach einem der Ansprüche 1 bis 4, **dadurch gekennzeichnet, dass** der wenigstens eine Speicher außerdem einen Speicherbereich für eine Liste von Endgeräten umfasst, die berechtigt sind, die Hardwarekomponente zu benutzen.

6. Hardwarekomponente nach Anspruch 5, **dadurch gekennzeichnet, dass** die Liste von Endgeräten, die berechtigt sind, die Hardwarekomponente zu benutzen, Kennungen von Endgeräten umfasst, die Gegenstand einer Paarbildung mit dem Ursprungs-Gateway waren.

7. Hardwarekomponente nach einem der Ansprüche 5 und 6, **dadurch gekennzeichnet, dass** die Liste von Endgeräten, die berechtigt sind, die Hardwarekomponente zu benutzen, in dem lokalen Kommunikationsnetzwerk erzeugt wird.

8. Hardwarekomponente nach Anspruch 1, **dadurch gekennzeichnet, dass** die Mittel zur Verbindung Mittel zur direkten Verbindung sind.

9. Service-Gateway, welches dazu bestimmt ist, ein lokales Kommunikationsnetzwerk mit einem Weitverkehrsnetz zu verbinden, Ursprungs-Gateway genannt,
**dadurch gekennzeichnet, dass** das Ursprungs-Gateway umfasst:
- eine Hardwarekomponente nach einem der Ansprüche 1 bis 8,
- Mittel zum Empfang einer Anforderung zum Öffnen eines sicheren Kommunikationstunnels mit der Hardwarekomponente, die dafür ausgelegt ist, den Zugriff eines entfernten Endgerätes auf das lokale Kommunikationsnetzwerk zu ermöglichen, , unter Berücksichtigung wenigstens einer Zugangskennung zu dem Ursprungs-Gateway, die in einem nichtflüchtigen Speicherbereich wenigstens eines Speichers der Hardwarekomponente gespeichert ist,
- Mittel zur Autorisierung des Öffnens eines sicheren Kommunikationstunnels mit der Hardwarekomponente.

10. Service-Gateway nach Anspruch 9, **dadurch gekennzeichnet, dass** die Mittel zur Autorisierung des Öffnens eines sicheren Kommunikationstunnels ein Fernzugriffs-Servermodul umfassen, das in der Lage ist, mit einem Fernzugriffs-Client-Modul der Hardwarekomponente zu kommunizieren.

11. Verfahren zum Zugriff eines entfernten Endgerätes auf ein lokales Kommunikationsnetzwerk,
wobei das lokale Kommunikationsnetzwerk mit einem Weitverkehrsnetz über ein Service-Gateway, Ursprungs-Gateway genannt, verbunden ist,
**dadurch gekennzeichnet, dass** das Verfahren die folgenden Schritte innerhalb einer Hardwarekomponente nach einem der Ansprüche 1 bis 8 ausführt, die zuvor von dem Ursprungs-Gateway gelöst wurde, mit dem Weitverkehrsnetz verbunden ist und dafür ausgelegt ist, den Zugriff des entfernten Endgerätes auf das lokale Kommunikationsnetzwerk zu ermöglichen:
- Lesen (31) wenigstens einer Zugangskennung zu dem Ursprungs-Gateway, die in einem nichtflüchtigen Speicherbereich wenigstens eines Speichers der Hardwarekomponente gespeichert ist, wobei die wenigstens eine Zugangskennung in dem Speicherbereich vor der Installation des dem lokalen Kommunikationsnetzwerk zugeordneten Ursprungs-Gateways oder während einer Phase der Paarbildung zwischen dem Ursprungs-Gateway und der Hardwarekomponente gespeichert wird,
- Anforderung (32) des Öffnens eines sicheren Kommunikationstunnels mit dem Ursprungs-Gateway mithilfe der wenigstens einen Zugangskennung zu dem Ursprungs-Gateway.

12. Verfahren zum Zugriff nach Anspruch 11, **dadurch gekennzeichnet, dass** dem Schritt der Anforderung des Öffnens ein Schritt der Überprüfung der Berechtigung zur Benutzung der Hardwarekomponente durch das entfernte Endgerät vorausgeht, und dadurch, dass das Öffnen des sicheren Kommunikationstunnels ausgeführt wird, falls die Überprüfung positiv ist.

13. Verfahren zum Zugriff nach einem der Ansprüche 11 und 12, **dadurch gekennzeichnet, dass** der Schritt der Anforderung des Öffnens eines sicheren Kommunikationstunnels gemäß einem Fernzugriffsprotokoll vom Typ "UPnP Remote Access" durchgeführt wird.

14. Autorisierungsverfahren für den Zugriff eines entfernten Endgerätes auf ein lokales Kommunikationsnetzwerk,
wobei das lokale Kommunikationsnetzwerk mit einem Weitverkehrsnetz über ein Service-Gateway, Ursprungs-Gateway genannt, verbunden ist,
**dadurch gekennzeichnet, dass** das Verfahren innerhalb des Ursprungs-Gateways ausführt:
einen Schritt des Empfangs einer Anforderung zum Öffnen eines sicheren Kommunikationstunnels mit einer Hardwarekomponente nach einem der Ansprüche 1 bis 8, die zuvor von dem Ursprungs-Gateway gelöst wurde und dafür ausgelegt ist, den Zugriff des entfernten Endgerätes auf das lokale Kommunikationsnetzwerk zu ermöglichen, unter Berücksichtigung wenigstens einer Zugangskennung zu dem Ursprungs-Gateway, die in einem nichtflüchtigen Speicherbereich wenigstens eines Speichers der Hardwarekomponente gespeichert ist,
einen Schritt der Autorisierung (33) des Öffnens eines sicheren Kommunikationstunnels mit der Hardwarekomponente.

15. Zugriffsautorisierungsverfahren nach Anspruch 14, **dadurch gekennzeichnet, dass** es weiterhin einen Schritt der Gewinnung einer Entsprechungstabelle zwischen einer Hardwarekomponentenkennung und einer Liste von Endgeräten, die berechtigt sind, diese Hardwarekomponente zu benutzen, umfasst, und dadurch, dass der Schritt der Autorisierung des Öffnens eines sicheren Kommunikationstunnels durchgeführt wird, falls das Endgerät zu der Liste gehört.

16. Computerprogramm, welches Anweisungen zur Durchführung eines Verfahrens nach Anspruch 11 oder nach Anspruch 14, wenn dieses Programm von einem Prozessor ausgeführt wird, umfasst.

## Claims

1. Hardware component configured for allowing a remote terminal (14) to access a local area communication network (11),
said local area communication network being connected to a wide area communication network (13) via a service gateway, known as the source gateway (12),
**characterized in that** said hardware component (15) is a detachable physical element of said source gateway, comprising:
- at least one memory (151) comprising a non-volatile storage area storing at least one access identifier for accessing said source gateway, said at least one access identifier being stored in said storage area prior to the installation of said source gateway associated with said local area communication network or during a phase of pairing said source gateway with said hardware component,
- connection means (152) for connecting to said wide area communication network,
- connection means (153) for connecting to said terminal, and
- means for requesting the opening of a secure communication tunnel with said source gateway, on the basis of said at least one access identifier for accessing said source gateway.

2. Hardware component according to Claim 1, **characterized in that** said means for requesting the opening of a secure communication tunnel comprise a remote access client module, capable of communicating with a remote access server module of said source gateway.

3. Hardware component according to either of Claims 1 and 2, **characterized in that** said means for requesting the opening of a secure communication tunnel comprise means for obtaining at least one item of information for connecting to said source gateway.

4. Hardware component according to any one of Claims 1 to 3, **characterized in that** said at least one memory also comprises a storage area for storing a key and/or a certificate for authenticating said hardware component and/or said source gateway.

5. Hardware component according to any one of Claims 1 to 4, **characterized in that** said at least one memory further comprises a storage area for storing a list of terminals authorized to use said hardware component.

6. Hardware component according to Claim 5, **characterized in that** said list of terminals authorized to use said hardware component comprises identifiers of terminals that have been made the subject of a pairing with said source gateway.

7. Hardware component according to either of Claims 5 and 6, **characterized in that** said list of terminals authorized to use said hardware component is created in said local area communication network.

8. Hardware component according to Claim 1, **characterized in that** said connection means are direct connection means.

9. Service gateway intended to connect a local area communication network to a wide area communication network, known as the source gateway,
**characterized in that** said source gateway comprises:
- a hardware component according to any one of Claims 1 to 8,
- means for receiving a request for opening a secure communication tunnel with said hardware component configured for allowing a remote terminal to access said local area communication network, taking into account at least one access identifier for accessing the source gateway stored in a non-volatile storage area of at least one memory of said hardware component,
- means for authorizing the opening of a secure communication tunnel with said hardware component.

10. Service gateway according to Claim 9, **characterized in that** said means for authorizing the opening of a secure communication tunnel comprise a remote access server module, capable of communicating with a remote access client module of said hardware component.

11. Access method for a remote terminal to access a local area communication network,
said local area communication network being connected to a wide area communication network via a service gateway, known as the source gateway,
**characterized in that** said method implements the following steps, within a hardware component according to any one of Claims 1 to 8, previously detached from said source gateway, connected to said wide area communication network and configured for allowing said remote terminal to access said local area communication network:
- reading (31) at least one access identifier for accessing said source gateway, stored in a non-volatile storage area of at least one memory of said hardware component, said at least one access identifier being stored in said storage area prior to the installation of said source gateway associated with said local area communication network or during a phase of pairing said source gateway with said hardware component,
- requesting (32) the opening of a secure communication tunnel with said source gateway, on the basis of said at least one access identifier for accessing said source gateway.

12. Access method according to Claim 11, **characterized in that** the step of requesting the opening is preceded by a step of verifying the authorization for using said hardware component by said remote terminal, and **in that** the opening of said secure communication tunnel is performed if the verification is positive.

13. Access method according to either of Claims 11 and 12, **characterized in that** said step of requesting the opening of a secure communication tunnel implements a "UPnP Remote Access" remote access protocol.

14. Access authorization method for authorizing a remote terminal to access a local area communication network,
said local area communication network being connected to a wide area communication network via a service gateway, known as the source gateway,
**characterized in that** said method implements, within said source gateway:
a step of receiving a request for opening a secure communication tunnel with a hardware component according to any one of Claims 1 to 8, previously detached from said source gateway, configured for allowing said remote terminal to access said local area communication network, taking into account at least one access identifier for accessing the source gateway stored in a non-volatile storage area of at least one memory of said hardware component,
a step of authorizing (33) the opening of a secure communication tunnel with said hardware component.

15. Access authorization method according to Claim 14, **characterized in that** it also comprises a step of obtaining a lookup table between a hardware component identifier and a list of terminals authorized to use said hardware component, and **in that** said step of authorizing the opening of a secure communication tunnel is implemented if said terminal belongs to said list.

16. Computer program including instructions for the implementation of a method according to Claim 11 or according to Claim 14 when this program is executed by a processor.
